# EUROPEAN PATENT APPLICATION

(11) **EP 4 613 087 A1**
(43) Date of publication of application: **10.09.2025**
(21) Application number: 24220440.2
(22) Date of filing: 17.12.2024
(51) Int. Cl.: A01C 7/20

(54) **SEEDING MACHINE**

(30) Priority: 22.12.2023 AR P230103541
(71) Applicant: Pividori, Marcelo Roberto, S3561BPA Avellaneda, Prov. of Santa Fe (AR)
(72) Inventor: PIVIDORI, MARCELO ROBERTO, Avellaneda, Santa Fe (AR); VANNI, MATIAS FRANCISCO, El Arañado, Córdoba (AR); COLOMBARA, CRISTIAN PEDRO, Llambi Campbell, Santa Fe (AR); COLOMBARA, HERNAN ARIEL, Llambi Campbell, Santa Fe (AR)
(74) Representative: Isern Patentes y Marcas S.L.

(57) **Abstract**

A seeding machine (1), which contains a structural frame (30), where on its lateral side it is connected through a coupling plate (40) to at least one deformable parallelogram (21) belonging to a seeding body. It includes at least one air channel (29), connected at one end to an air compensating tank (28) and at the other distal end to a pneumatic actuator with an internal guide (11), integrally arranged through a set (1) of fastening means and positioned within said at least one deformable parallelogram (21). This pneumatic actuator with an internal guide (11) is operatively connected to a pneumatic air pressure regulation system (31), controlled by a monitoring and control system (39).

## Description

### 1. Title and technical field of the invention

The present invention pertains to a "seeding machine" for agricultural applications, specifically of the "continuous" or "single-grain" type, featuring counter-pressure systems. It includes seeding trains or planting bodies that employ "counter-pressure springs" or "pneumatic counter-pressure systems," also referred to as "pneumatic counter-pressure cushions."

### 2. Background of the invention and problems to be solved

Seeding machines consist of a structural frame to which the seeding trains are attached, arranged side by side in a single row or two rows, one in front of the other, depending on the model, with the structure supported by wheels. The frame holds seed hoppers and, in many cases, hoppers or tanks for fertilizers applied during sowing. In the process of establishing an extensive crop, each seeding train, as it moves across the ground, enables the regulated placement of seeds along a row, hereinafter referred to as a "line," ["linio" in Spanish] with each seeding train operating independently from the others.

Crops with larger seeds, such as corn, soybeans, sunflower, cotton, sorghum, and beans, are referred to as "coarse grains" and are distinguished from those known as fine or small grains: wheat, canary seed, oats, barley, and rye. For each of these two groups of seeds, there are seeders with distinct designs and characteristics.

The planting of seeds involves two combined procedures: seed metering and placement and the operations on the soil by the different components of the seeding train. As it moves forward, the following operations are successively carried out on a point of the row to be sown: the cutting of stubble and/or micro tillage, the opening of the furrow where the seed is placed, the seed compacting, and finally the covering of the furrow. The intended goal is for the furrow conditions to be uniform and aligned with the predetermined parameters for the crop; to achieve this, the seeding bodies are equipped with gauge wheels and load control.

Load control and depth limiters: The existing machines feature two types of configurations for attaching the seeding train: components of the train fixed to a single longitudinal arm or fixed to a structure supported by a deformable parallelogram. While the former is simpler in construction and allows for narrower rows, it causes variations in the disc-cutting angle with arm oscillations. On the other hand, those mounted on deformable parallelograms maintain the cutting angle consistently, making them the most widely used.

Determining seeding depth and ensuring uniformity is critical, involving a combination of load on each seeding train and adjusting gauge wheels. The load control is actually a regulatory increase in the seeding train's weight. The gauge wheels allow monitoring to ensure the load is correct; they may indicate an underweight body if they do not rotate continuously. Conversely, suppose the gauge wheels mark the residue or soil. In that case, it indicates the excess load on the body, which can lead to over-compaction of the soil near the seed, adversely affecting the seeding process and leading to premature wear of bearings and wheels. Load control in the seeding train allows the unit to conform to the terrain and maintain uniform seeding depth. The most commonly used system currently consists of linear springs placed on the deformable parallelogram or between it and the machine structure. With a simple adjustment system, the load on the seeding train can be adapted to various soil conditions. The tension of the springs is easily adjusted with the seeder stationary, though not while the machine is operating; a position scale allows one end to be mounted in a specific position. A simple change in position allows the tension to be increased or decreased.

In the prior art, the options for existing pneumatic counter-pressure systems can be categorized into those that use reinforced, adjustable counter-pressure springs with mechanical coil springs and those that apply a pneumatic counter-pressure system that utilizes rubber air cushions with in-line air inlets associated with the duty cycle of the air compressor assembly, where the air cushions are linked in parallel.

### • The problem with linear mechanical counter-pressure springs

While load control through linear mechanical springs, also known as counter-pressure springs, is simple and yields good results, these springs have certain drawbacks. The force exerted by the springs is proportional to their displacement, which means they cannot provide a constant or adjustable force as needed. They also have an elasticity limit-beyond this point, they deform permanently and lose their ability to return to their original shape. Additionally, they lack an internal mechanism to dissipate the kinetic energy generated when released, leading to undesirable oscillations and vibrations that can impact the performance and durability of the equipment that uses them. A spring exerts different loads depending on its degree of extension or compression, as traction increases the load as it stretches or contracts.

Uneven terrain, debris, or significant crop residue can also lead to undesirable effects, such as oscillations or bouncing due to the lack of damping. The spring produces an elastic force that varies proportionally with its extension or compression from the relaxed position, causing significant variation in the pressure exerted on the soil through the gauge wheel as the spring moves between its maximum open and minimum closed positions. Furthermore, because it lacks viscous damping properties, it creates sustained oscillations over time, leading to an uneven seedbed, with seeds being placed at varying depths and exposing all the mechanisms of the seeding train to oscillations and shocks that wear them down prematurely.

When changing fields or dealing with different soil types (hard or soft), adjusting the stiffness of all the metal springs on the equipment would require repositioning the anchors of all springs, adjusting the tension nut on each, or even adding springs in each position. For these reasons, there is a strong trend toward replacing linear-load mechanical springs with constant-load pneumatic bellows.

### • The problem with pneumatic bellows or pneumatic counter-pressure systems

Existing pneumatic counter-pressure systems must use high air pressure in constant-load pneumatic cushions, also known as "pneumatic counter-pressure systems" or "pneumatic bellows," to prevent deformation and achieve the required load on the gauge wheels. This is because of how the bellows or air cushion is anchored to the seeder chassis-fixed at the top and with movement only at the lower attachment to the deformable parallelogram. In these "air cushions" or "pneumatic counter-pressure springs," each row unit has a single rubber air cushion or bellows located between the parallel arms and the chassis or frame. The air cushions are connected parallel to the pressurized air channel, so air can only be added or released from all row units simultaneously. When adjusting the counter-pressure in the row unit, the operator selects the counter-pressure (kg [lb]) to be applied across the entire seeder since the pneumatic counter-pressure system cannot automatically adjust the counter-pressure.

The bellows are typically positioned nearly perpendicular to the ground, parallel to the chassis, linking the latter with the deformable parallelogram of each unit. Due to the anchoring method and the positioning of the bellows, the force applied to the deformable parallelogram is not optimal to achieve the necessary pressure exerted by the gauge wheel on the soil. Since the bellows are interconnected either in series or parallel through a narrow air channel that does not allow sufficient airflow to absorb variations, each seeding unit loses its operational independence.

The hose or air channel interconnecting the bellows typically lacks the required cross-sectional area to allow adequate airflow, resulting in high resistance, which causes pressure surges or drops in the bellows. High pressures are applied to the bellows to maintain their shape and prevent breakage, reducing their ability to conform to the terrain. This results in variations in the adequate seeding depth at which each seed from the same seeding unit is deposited, leading to uneven seeding depth along each row.

### • Proposed solution:

The proposed object is a "seeder machine" that includes a pneumatic actuator applied to the seeding units, which are the assemblies of mechanisms that operate on each furrow. These are mounted on the structural frame of the seeder and are referred to as "seeding units," also known as "seeding mechanisms" or "seeding sections." These are also referred to as "planting unit," "planting mechanism," or "seeding unit" in English. The seeding unit is a seeder's essential component responsible for planting operations, such as furrow opening, seed placement, and furrow covering.

Specifically, a seeding train or unit with a pneumatic actuator featuring an internal guide, individually connected to an air pressure regulation system and a control and monitoring system for said pressure regulation in pneumatic load-controlled seeder machines, applied to seeding trains or units.

The pneumatic actuator with an internal guide consists of a pneumatic bellows of the air cushion type, featuring an extensible internal guide and fastening devices mechanically connected to the deformable parallelogram, which is attached to the structural frame of the seeder. This design prevents damage or deformation of the rubber bellows caused by the asymmetric working stresses to which they are subjected.

Additionally, the pneumatic actuator with an internal guide is connected to an air pressure regulation system and a control and monitoring system for said air pressure regulation system, which improves the function of the pneumatic spring with an internal guide by adjusting the working pressure and absorbing overpressure or underpressure to which the springs are exposed due to terrain irregularities.

This allows the application of constant, adjustable, controlled, and independent pressure on each seeding unit, adapting to the terrain conditions over which the seeding train moves. This ensures uniform seeding depth for seed placement, improves seed spacing, and prevents over-compaction of the soil around the seed, resulting in uniform seed emergence. Furthermore, adding damping to the system reduces vibration and/or shocks on the seeding unit, preventing excessive fatigue on gauge-wheel bearings, discs, and mounting bolts. Ultimately, the seeding train is stabilized, delivering uniform, constant, adjustable, and independent pressure for each seeding unit, adapting to the working demands imposed by terrain irregularities. This prevents excessive vibrations in the seeder body and, consequently, in the seed meter and seed drop tube, ensuring precise seed metering and placement in the soil with consistent spacing and depth without creating excess load on the unit or over-compacting the soil around the seed. The result is an optimal seedbed across all height and working position ranges and in all types and conditions of planting terrain.

### 3. Components involved in the invention's system:

S: Seeding machine.
- Rod with threaded ends **(1)**
- Piston with perforations **(2)**
- Cylinder cap **(3)**
- Cylinder cap bushing **(4)**
- Guide cylinder **(5)**
- Fixing plate **(6)**
- Lower cylinder reinforcement **(7)**
- Blind cap **(8)**
- Fixing bushing **(9)**
- Pneumatic bellows **(10)**
- Pneumatic actuator with an internal guide **(11)**
- Upper fixing device **(12)**
- Upper fixing bolt**(13)**
- Lower fixing device **(14)**
- Lower fixing bolt**(15)**
- Upper cap of the pneumatic bellows **(16)**
- Upper frame of the parallelogram **(17)**
- Lower frame of the parallelogram **(18)**
- Fixed front of the parallelogram **(19)**
- Movable front of the parallelogram **(20)**
- Deformable parallelogram **(21)**
- Lower base of the pneumatic bellows **(22)**
- Air compressor **(23)**
- Primary pressurized air tank **(24)**
- Air pressure regulator **(25)**
- Pressure gauge **(26)**
- Air channel **(27)**
- Regulated pressurized air compensating tank **(28)**
- Air channel **(29)**
- Structural frame of the seeder **(30)**
- Air pressure regulation system **(31)**
- Compensating tank pressure sensor **(32)**
- Electronic regulator **(33)**
- 3-way solenoid valve with electronic control **(34)**
- Bellows pressure sensor **(35)**
- Processing unit with built-in vibration sensor **(36)**
- Main control unit **(37)**
- CAN communication network **(38)**
- Control and monitoring system **(39)**
- Coupling plate **(40)**

### 4. Description of the Figures

For greater clarity and understanding of the object of the present invention, it has been illustrated in the following figures, in which it is represented in one of the preferred embodiments, purely by way of example, without implying any limitations to the scope of protection of this patent application, where:

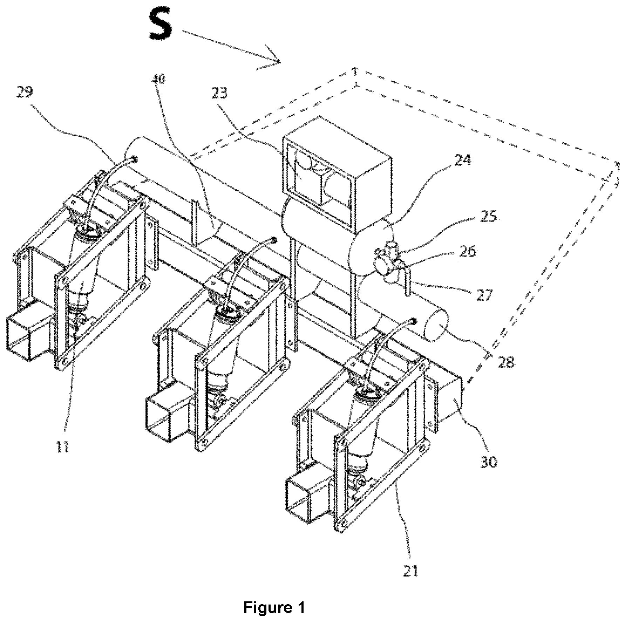

**Figure 1****):** A top perspective view of the parts comprising the associated assemblies arranged in the seeding train, supported by the structural frame of the seeder **(30).** The first assembly corresponds to an air pressure regulation system **(31),** which includes an air compressor **(23)** connected to a primary pressurized air tank **(24)** that, in turn, is connected to the regulated pressurized air compensating tank **(28)** through an air channel **(27)** associated with an air pressure regulator **(25)** and a pressure gauge **(26).** The previously mentioned regulated pressurized air compensating tank **(28)** is individually connected via the air channel **(29)** to each pneumatic actuator with an internal guide (11) located within the structure of each deformable parallelogram **(21)** of the seeding train.
**Figure 2****):** An exploded view of the parts that make up the internal guide of the pneumatic actuator with internal guide **(11),** showing the rod with threaded ends **(1),** the piston with perforations **(2),** the cylinder cap **(3),** the cylinder cap bushing **(4),** the guide cylinder **(5),** the fixing plate **(6),** the lower cylinder reinforcement **(7),** the blind cap **(8),** and the fixing bushing **(9).**
**Figure 3****):** A detailed external view of the lower section of the guide cylinder and its base, showing the assembled parts: the guide cylinder **(5),** the fixing plate **(6),** the lower cylinder reinforcement **(7),** the blind cap **(8),** and the fixing bushing **(9).**
**Figure 4****):** An external view of the assembled internal guide of the pneumatic actuator with an internal guide **(11),** without the pneumatic bellows **(10).**
**Figure 5****):** A view of the assembled pneumatic actuator with internal guide **(11),** showing the upper cap of the pneumatic bellows **(16),** which supports a connection fitting, the pneumatic bellows **(10),** the lower base of the pneumatic bellows **(22),** the rod with threaded ends **(1),** the cylinder cap **(3),** the guide cylinder **(5),** the lower cylinder reinforcement **(7),** the fixing plate **(6),** and the fixing bushing **(9).**
**Figure 6****):** A view of Figure 5) of the fully assembled pneumatic actuator with an internal guide **(11).**
**Figure 7****):** A cross-sectional view of the internal section of the pneumatic actuator with internal guide **(11)** in an extended working position, showing the pneumatic bellows (10) in the extended position and the internal guide assembly also in the extended position. The rod with threaded ends **(1)** has at its lower end the piston with perforations **(2),** which is displaced upward in a linear motion within the guide cylinder **(5),** centered by the piston with perforations **(2)** itself and by the cylinder cap bushing **(4).**
**Figure 8****):** A view of Figure 7) in a compressed working position, showing the pneumatic bellows **(10)** in the contracted position and the internal guide assembly also in the contracted position, with the rod with threaded ends **(1)** whose lower end has the piston with perforations **(2)** displaced downwards linearly within the guide cylinder **(5),** centered by the piston with perforations **(2)** itself and by the cylinder cap bushing **(4).**
**Figure 9****):** A view of the pneumatic actuator with an internal guide **(11),** showing the connection at its upper end with the upper fixing device **(12)** and the upper fixing bolt **(13)** and at its lower end with the lower fixing device **(14)** and the lower fixing bolt **(15).**
**Figure 10****):** A view of Figure 9) with the fixing devices **(12)** and **(14)** installed.
**Figure 11****):** An exploded view of the deformable parallelogram **(21),** showing its components: the fixed front of the deformable parallelogram **(19)** and the movable front of the deformable parallelogram **(20)** connected by the upper frames of the parallelogram **(17)** and the lower frames of the parallelogram **(18).**
**Figure 12****):** A view of Figure 11) of the fully assembled deformable parallelogram **(21).**
**Figure 13****):** A perspective view of the pneumatic actuator with an internal guide **(11),** showing its arrangement within the deformable parallelogram **(21),** connected by the installed fixing devices **(12)** and **(14).**

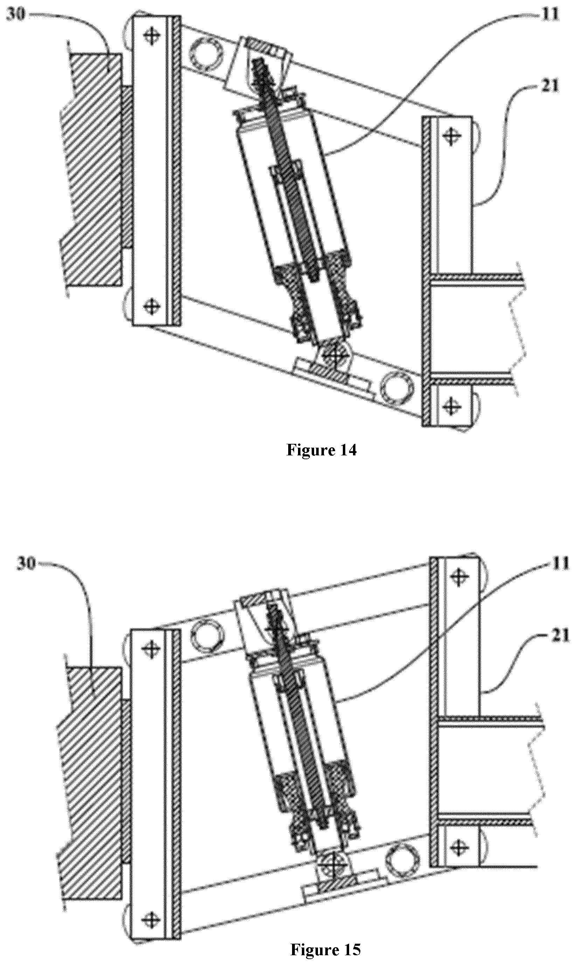

**Figure 14****):** A lateral sectional view of the deformable parallelogram **(21)** in its lowest position, with the pneumatic actuator with an internal guide **(11)** extended.
**Figure 15****):** A view of Figure 14) shows the deformable parallelogram **(21)** in its highest position, with the pneumatic actuator with an internal guide **(11)** contracted.

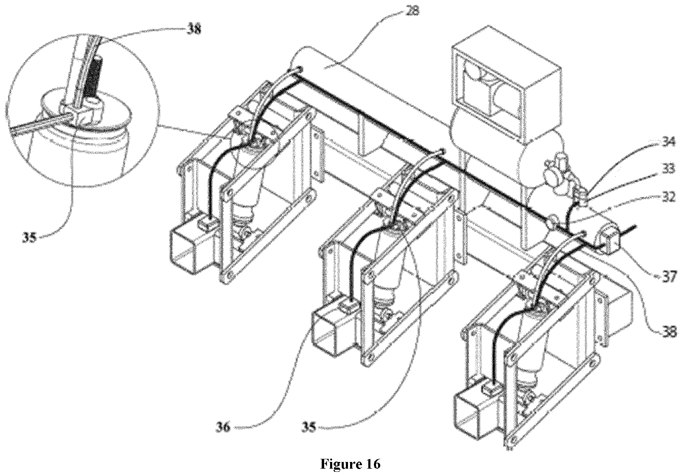

**Figure 16****):** A view of the air pressure regulation system **(31),** showing the arrangement of its components: a regulated pressurized air compensating tank **(28),** a digital pressure sensor **(32),** an electronic regulator **(33)** housed together with a 3-way solenoid valve with electronic control **(34)** in a single casing, a bellows pressure sensor **(35),** and a data processing unit with a built-in vibration sensor **(36).** The previously mentioned components are interconnected and linked to the main control unit with an acceleration sensor **(37)** through a CAN-type communication network **(38),** allowing user command and monitoring through this network.

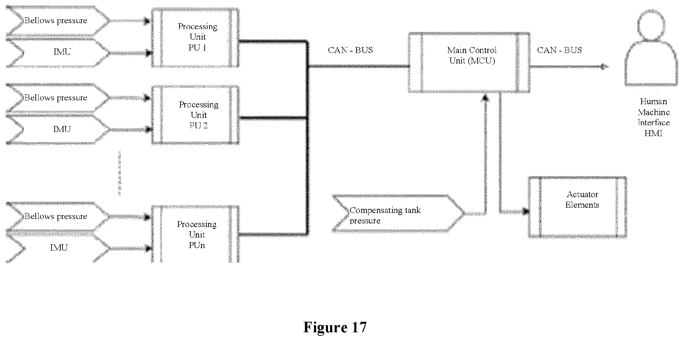

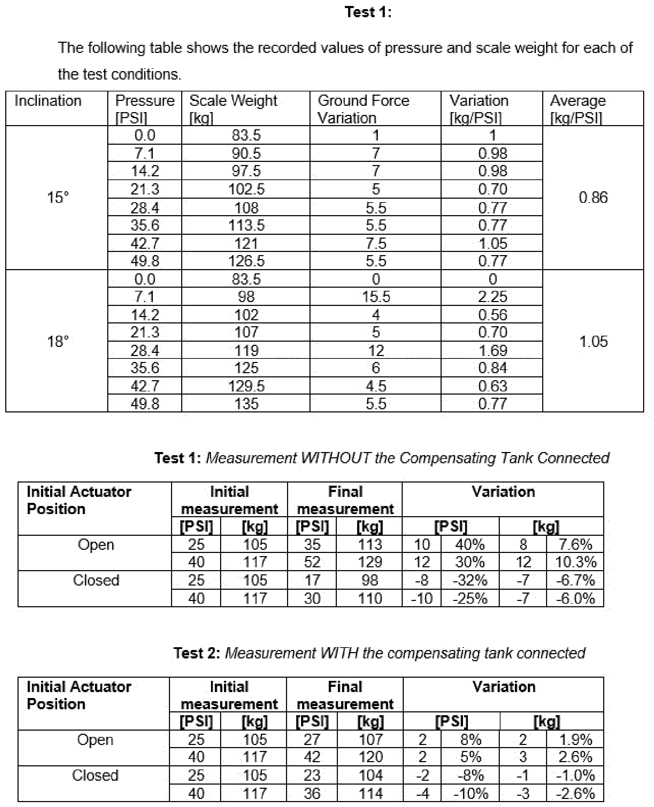

**Figure 17****):** A schematic diagram of the control and monitoring system (39) for the pressure regulation system (31).
**Figure 18****):** A table with the values and results of **Test No. 1,** showing the force applied by the gauge wheel and the table displaying the recorded values of pressure and weight on the scale for each of the test conditions, according to the inclination degree of the pneumatic actuator with an internal guide (11). In the same figure, the results of **Test 1** are shown: Measurement **WITHOUT** the compensating tank connected and **Test 2:** Measurement **WITH** the compensating tank connected.
**Figure 19****):** A table with the values and results of **Test 3:** Field verification, showing the obtained results.

### 5. Detailed description of the invention

The object of this application refers to a "seeding machine" with a pneumatic actuator applied to the seeding trains or units. The pneumatic actuator with an internal guide **(11)** is connected to an air pressure regulation system **(31)** and is linked to a control and monitoring system **(39)** for the pressure regulation system **(31).**

The pneumatic actuator with an internal guide **(11)** is installed in the seeding trains or units of the seeding machine within the deformable parallelograms, mechanically coupled with the upper **(12)** and lower **(14)** fixing devices, as detailed below.

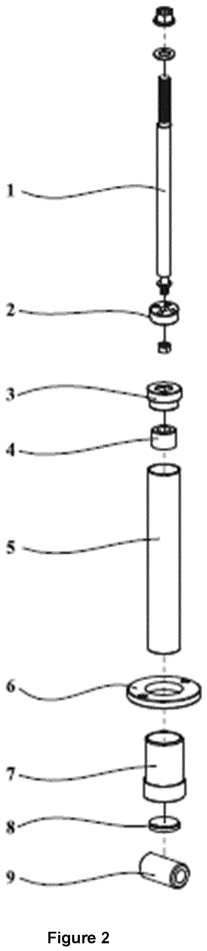

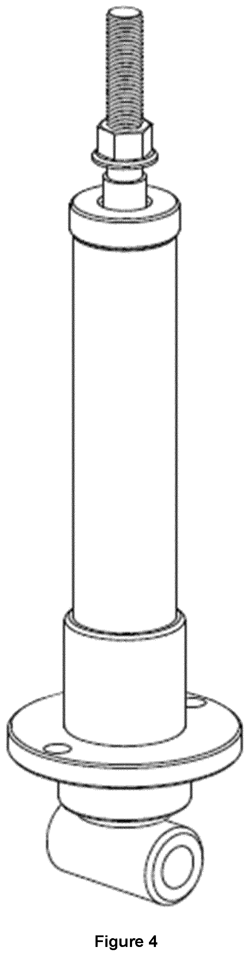

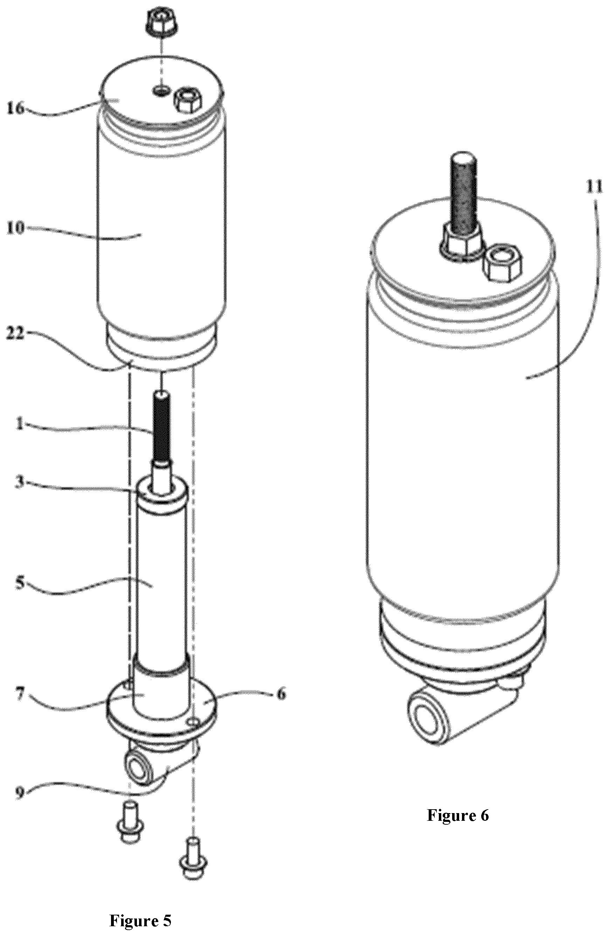

The pneumatic actuator with an internal guide **(11)** comprises two assemblies:
a) An external guide cylinder **(5)** containing a rod with threaded ends **(1)** inside it.
b) A pneumatic bellows **(10).**
Where:
a) The guide cylinder **(5)** consists of a seamless laminated cylinder or tube made of "SAE" type steel, with an outer diameter of 38.1 millimeters and 2 mm thick walls. Its lower end is inserted into the lower reinforcement of the cylinder **(7),** which is made of a cylindrical steel tube with a seam, "SAE" 1010 type, with an inner diameter of 38.1 millimeters, 4 mm thick walls, and a length of 73 millimeters. An external recess of 2 millimeters is machined on it, leaving 20 millimeters unmachined along its axial length to act as a support for the fixing plate **(6).** The guide cylinder **(5)** is closed at the base with a blind cap **(8)** made of "SAE" 1010 type steel, with a diameter of 35 millimeters and 4 millimeters thick. This blind cap **(8)** is, in turn, connected to the fixing bushing **(9),** made of "SAE" 1045 type steel, with a diameter of 30 millimeters and a length of 55 millimeters. Furthermore, the lower reinforcement of the cylinder **(7),** previously mentioned, features a protruding edge with a larger diameter at the lower section on its outer face, which supports a cylindrical assembly plate or fixing plate (6) with a central hole through which it connects to the lower reinforcement of the cylinder **(7).** It has two juxtaposed holes on its surface to anchor the pneumatic bellows **(10).** All the aforementioned parts are mechanically connected by welding, forming a single piece or monoblock, as shown in **Figures 2****) and** **3****).**
   The rod with threaded ends (1) consists of a ground tempered bar made of "SAE" 1045 type steel, featuring a male thread at each end. At its lower end, it is mechanically connected with adjustable nuts and washers to a head or piston with perforations (2) made of graphite-filled Teflon, which has a central hole on its surface and four equidistant adjacent holes. At its upper end, after passing through the cylinder cap (3) via the cylinder cap bushing (4) inserted into it and then being inserted into the guide cylinder (5) on the piston side with perforations (2), it is connected with adjustable nuts and washers to the upper cap of the pneumatic bellows (16) and the upper fixing bolt (13). This completes the assembly shown in **Figure 2****)** and **Figure 4****).**
**b)** The pneumatic rubber bellows (10) consists of a tubular section made of a composite rubber material (rubber and fabric), sealed at both ends with two circular and airtight cast aluminum caps **(16)** and **(22),** each with a concentric central hole where it connects with the pneumatic actuator with an internal guide (11) (see **Figure 4**), defined by the assembly of "a rod with threaded ends **(1)** attached to the piston with perforations **(2),** the cylinder cap **(3),** the cylinder cap bushing **(4),** connected to the guide cylinder **(5),** the fixing plate **(6),** the lower reinforcement of the cylinder **(7),** the blind cap **(8),** and the fixing bushing **(9)"** of the previously described pneumatic actuator with an internal guide **(11).** Furhtermore, the upper cap of the pneumatic bellows **(16)** is connected at the upper end with a nut to the ½" male thread of the rod with threaded ends **(1)** and is associated with a "racord"-type air connector, while the lower base of the pneumatic bellows **(22)** is bolted to the fixing plate **(6)** at the lower end, forming the complete assembly of the pneumatic actuator with an internal guide **(11).** **Figure 5)** and **Figure 6****).**

### Assembly method of the set

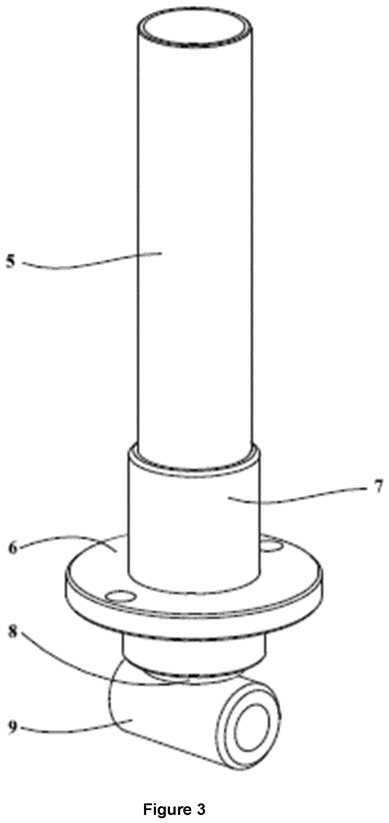

1. Insert the lower thread of the rod with threaded ends **(1)** through the central hole in the piston with perforations **(2),** securing it with the corresponding nut. Figure 2).
2. Insert the fixing plate **(6)** into the lower reinforcement of the cylinder **(7)** up to its stepped section, and seal it hermetically with a weld on the lower part of the fixing plate **(6),** as shown in Figure 3).
3. Insert the guide cylinder **(5)** from the top of the previously welded parts **(6)** and **(7)** until they are aligned at the lower edge. Then, close with the blind cap **(8),** welding the parts to ensure a tight seal. Subsequently, weld the fixing bushing **(9)** to the lower part of the blind cap **(8),** forming a single piece, as shown in Figure 3).
4. Insert the rod with threaded ends **(1)** into the guide cylinder **(5)** from the lower side, where the piston with perforations **(2)** is attached.
5. Press-fit the cylinder cap bushing **(4)** into the cylinder cap **(3).**
6. Insert the upper end of the rod with threaded ends **(1)** into the central hole of the cylinder cap bushing **(4),** already positioned in the cylinder cap **(3),** and attach the cylinder cap **(3)** to the guide cylinder **(5),** joining them with a weld. This completes the internal guide assembly shown in Figure 4).
7. Insert the internal guide, consisting of the lower base of the pneumatic bellows **(22),** until it stops against the fixing plate **(6),** securing it hermetically with adjustable bolts. In the same process, insert the upper thread of the rod with threaded ends **(1)** into the central hole of the upper cap of the pneumatic bellows **(16),** securing it tightly with a washer and an adjustable nut (see Figure **5****).** This completes the pneumatic actuator with an internal guide **(11),** as shown in Figure 6).

The guide cylinder assembly **(5)** with its base, along with the cylinder cap **(3)** containing the inserted cylinder cap bushing **(4),** in conjunction with the piston with perforations **(2),** keep the rod with threaded ends **(1)** centered with respect to the radius of the pneumatic bellows **(10),** allowing only axial movements. The materials used to manufacture the piston with perforations **(2)** and the cylinder cap bushing **(4)** allow both the rod with threaded ends **(1)** and the piston with perforations **(2)** to slide with minimal friction inside the guide cylinder **(5).** The perforations in the piston with perforations **(2)** allow the air inside the guide cylinder (5) to remain at the same pressure in any position of the pneumatic actuator with an internal guide **(11),** even in its extreme positions. These assemblies and construction features of the internal guide guarantee the optimal working position of the pneumatic bellows and the free vertical movement of the rod with threaded ends **(1).** See **Figure 3****)** and **Figure 4****).**

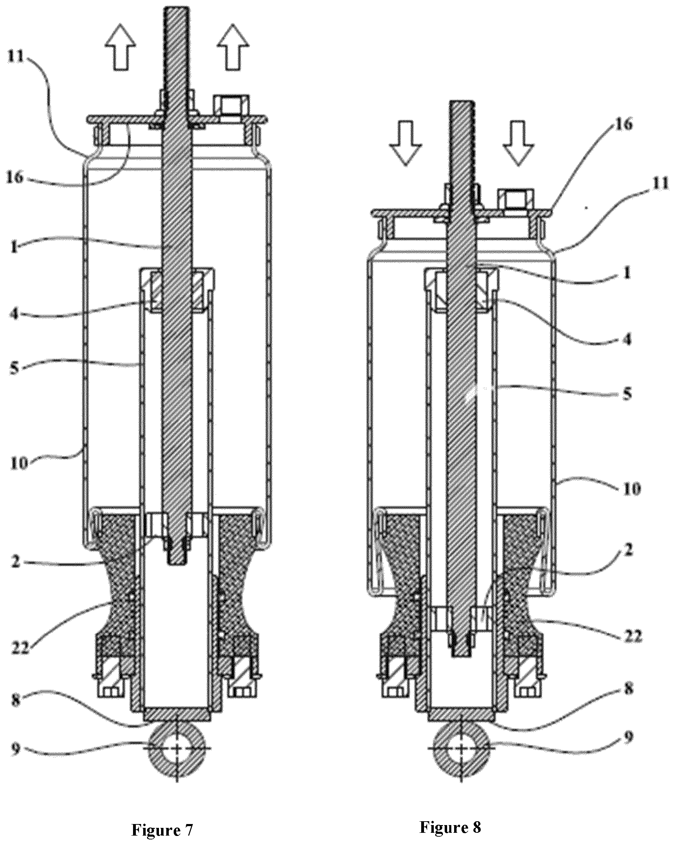

The pneumatic actuator with an internal guide **(11)** has a variable length within a range equivalent to that of the rubber pneumatic bellows **(10),** which stretches and contracts within the limits allowed by the internal guide, always remaining within its nominal working conditions. As mentioned in the previous paragraph, the internal guide maintains alignment despite the stretching or contraction of the pneumatic bellows and the radial forces exerted on the pneumatic actuator with an internal guide **(11)** under normal working conditions during seeding, ensuring the parallelism of the ends of the pneumatic bellows **(10)** and their perpendicularity with respect to the axis of the assembly. These movement constraints ensure that the pneumatic bellows **(10)** will not be subjected to unpredictable stresses and deformations that could lead to rupture or premature wear. See **Figure 7)** and **Figure 8****).**

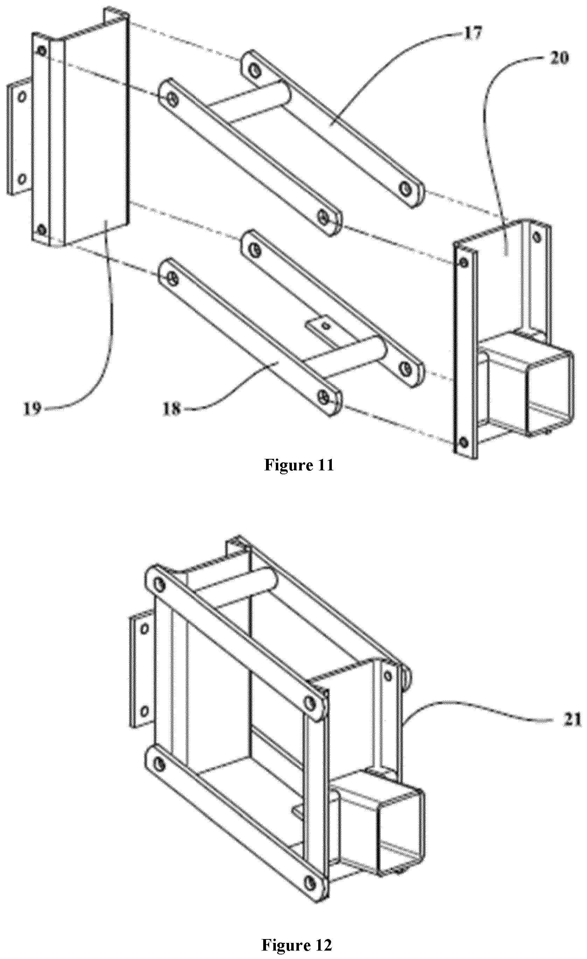

The deformable parallelogram **(21)** found in the seeding units or trains of the seeding machines comprises a fixed parallelogram front **(19)** attached to the structural frame of the seeder **(30)** and a movable parallelogram front **(20),** which is associated with the seeding train. Both are connected to each other by the upper frame of the parallelogram **(17)** and the lower frame of the parallelogram **(18).** See **Figure 11)** and **Figure 12****).**

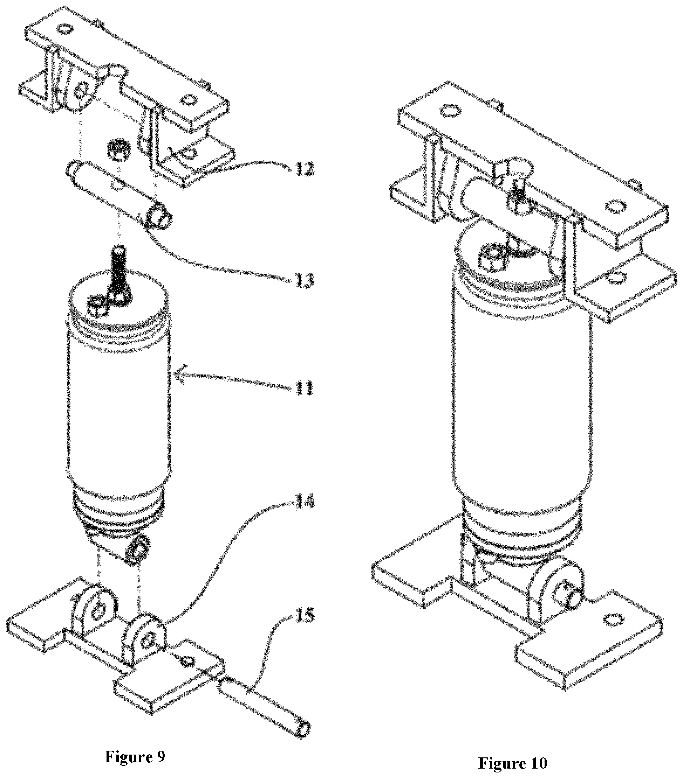

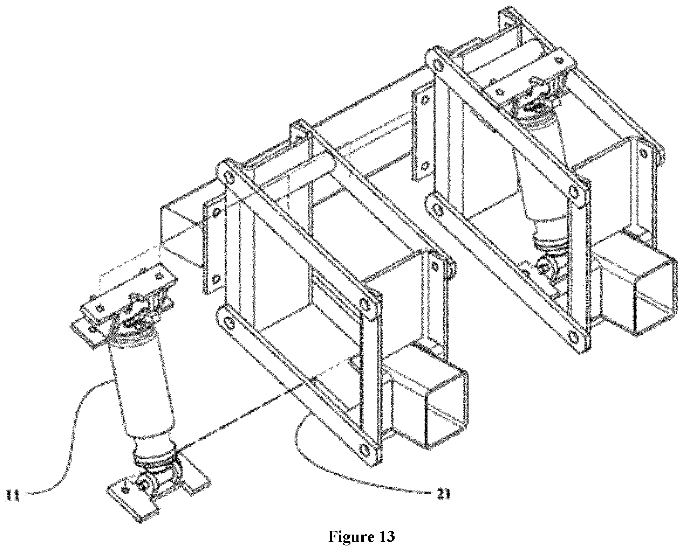

The pneumatic actuator with an internal guide **(11)** is arranged inside the deformable parallelogram **(21)** in an internal position, located at an inclination angle between 10° and 40° with respect to the vertical, with this angle being measured when the lower frame of the parallelogram **(18)** and the upper frame of the parallelogram **(17)** are in a parallel position to the ground. It is connected at the upper end with the upper fixing bolt **(13)** to the upper fixing device **(12)** and at the lower end to the lower fixing device **(14)** by means of a lower fixing bolt **(15).** Both fixing bolts allow the pneumatic actuator with an internal guide **(11)** to adapt its position to the movements of the deformable parallelogram **(21),** ensuring that the appropriate force is applied regardless of the position and movements of the deformable parallelogram **(21)** in its nominal working state. **Figure 9), Figure 10****)** and **Figure 13****).**

The fixing devices **(12)** and **(14),** connected to the deformable parallelogram **(21)** through the fixing bolts **(13),(15),** allow the installation of the pneumatic actuator with an internal guide **(11)** in various seeding units or trains of seeding machines with a deformable parallelogram, while also facilitating their replacement if necessary. **Figure 13****).**

In a seeder with a specific number of seeding trains, an equal number of pneumatic actuators with an internal guide **(11)** will be installed, each individually connected to an air pressure regulation system **(31),** directly linked to the regulated pressurized air compensating tank **(28)** via the air channel **(29),** in order to ensure the independent operation and optimize the performance of each pneumatic actuator with an internal guide **(11),** absorbing the overpressure or underpressure to which the actuators are exposed due to the regular movements of the seeding train caused by the irregularities of the terrain being worked on.

The air pressure regulation system **(31)** is mounted on the structural frame of the seeder **(30),** allowing for a direct connection between the pneumatic actuator with an internal guide **(11)** and the regulated pressurized air compensating tank **(28)** through the air channels **(29).**

**The air pressure regulation system (31)** includes an air compressor **(23)** housed in a protective cabinet to shield it from normal field environmental conditions, which is connected via a 12 mm or larger polyurethane air channel **(27)** to a primary pressurized air tank **(24),** which is linked to a regulated pressurized air compensating tank **(28)** through another air channel **(27).** This connection passes through an air pressure regulator **(25)** equipped with a pressure gauge **(26)** to display the system's working pressure and through an electronic regulator **(33)** that provides fine and dynamic adjustment of the working pressure, which ranges between 10 PSI and 50 PSI depending on the terrain conditions during operations. The air pressure regulation system **(31)** is mounted on the structural frame of the seeder **(30),** providing structural robustness and allowing a direct connection between the pneumatic actuators with an internal guide **(11)** and the regulated pressurized air compensating tank **(28)** through air channels **(29),** which have similar characteristics to the air channel **(27).** This configuration grants independence in operation to each seeding unit that contains the pneumatic actuator with an internal guide **(11).**

Optimal fine-tuning of the load control system can be achieved by accurately determining the necessary pneumatic working pressure for different types of terrain and crops. This involves dynamically measuring the performance of each seeding unit with appropriate sensors and calibrating the air pressure, which is monitored and adjusted while the machine is in operation, to optimize the system's performance in each working condition it is subjected to.

The air pressure regulation system **(31)** is of the sealed type, requiring no continuous generation of pressurized air. The compressor operates only to reach the appropriate air pressure and, if necessary, to adjust the pressure should it fall outside the user-specified operating range.

The regulated pressurized air compensating tank **(28),** as previously mentioned, is individually connected to each pneumatic actuator with an internal guide **(11)** through compensating tank air channels **(29)** (polyurethane tubes with a minimum diameter of 12 mm). This design prevents airflow restrictions within the system and ensures the independent operation of each pneumatic actuator with an internal guide **(11).** It stabilizes the pressure exerted by the gauge wheel of each seeding train on the soil, thereby guaranteeing uniform seed depth placement. This is achieved through accurate terrain following and proper working pressure, resulting in uniform seed emergence.

**The control and monitoring system (39) of the pressure regulation system (31) (see** **Figure 16****),** equipped with an integrated acceleration sensor, is responsible for adjusting the pneumatic pressure of the overall system. It considers the user's instructions and the terrain characteristics obtained through the system's sensors. Additionally, it generates a mapping of the terrain and the actual working conditions experienced by each of the seeding units being monitored.

The control and monitoring system **(39)** consists of three fundamental elements that ensure its functions:
1) Sensing Elements: These are responsible for measuring control and monitoring variables.
   The variables to be measured are listed below:
   a) Pneumatic Pressure in the bellows of each seeding unit: Measured using the bellows pressure sensor **(35).**
   b) Pneumatic Pressure in the System's Air Compensating Tank: This is measured using the compensating tank pressure sensor **(32).**
   c) Vibrations of the seeding units at the height of the metering device, measuring the accelerations experienced by the seeding unit. This is part of the Processing Unit with a built-in vibration sensor **(36)** for each seeding unit.
   d) Force exerted on the soil by the gauge wheel: This variable is calculated based on the seeding unit's mechanical characteristics, the angle at which the Spring is positioned, and the air pressure within it.
   e) Recording the movements of the seeder's frame to compare them with the movements recorded by each processing unit with built-in acceleration sensors **(36)** located on the seeding units. This comparison allows for determining the efficiency of the terrain following by each seeding train and implementing the necessary corrective actions on the pneumatic working pressure of the pneumatic actuators with internal guide **(11).** These adjustments are made through the main control unit, which includes an acceleration sensor, accelerometers, and gyroscopes **(37),** positioned on the regulated pressurized air compensating tank **(28)** and supported by the seeder's structural frame **(30)** through the fixing plate **(40).**
2) **Actuator Elements:** These are responsible for performing the actions that adjust the system states to achieve optimal results based on the terrain conditions and configurations set by the user. The system mainly consists of the following control components:
   a) ON-OFF System for the Compressor: A relay system that enables or disables the compressor's power supply directly from the user interface through the Main Control Unit **(37).**
   b) Electronic Pressure Switch: This element determines when to turn the compressor on or off to maintain the regulated air pressure in the primary tank. It is part of the compressor's air pressure control system **(27).**
   c) Electronic Regulator **(33):** Performs fine and dynamic adjustment of the regulated air compensating tank **(28)** pressure by controlling a 3-way solenoid valve with electronic regulation **(34),** which allows for increasing or decreasing the air pressure in the regulated air compensating tank **(28),** as well as sealing it to maintain constant pressure. The Electronic Regulator **(33)** is located after the Air Pressure Regulator **(25)** on the air channel **(27)** that connects the primary pressurized air tank **(24)** to the regulated air compensating tank **(28).**
3) **Processing Elements:**
   a) Processing Unit with Integrated Vibration Sensor **(36):** Each seeding unit has its processing unit with built-in acceleration sensors. It reads the bellows pressure sensor **(35),** stores the obtained data, and communicates with the Main Control Unit **(37)** via the CAN communication network **(38),** sending the requested information.
   b) Main Control Unit (MCU) **(37):** Based on the values of the variables measured by the processing units with integrated vibration sensors **(36),** the analyses performed, and the system configurations provided by the user, the MCU makes decisions that execute commands on the specified Actuator Elements to adjust the system's operation. Additionally, it communicates via the CAN communication network **(38)** with a Human-Machine Interface (HMI) located on the tractor.

### • Working Principle

### Pneumatic actuator with an internal guide (11)

The pneumatic actuator with an internal guide **(11)** is positioned within the deformable parallelogram **(21)** of each seeding unit or train at an adjustable angle of inclination between 10° and 40° relative to the vertical when the parallelogram's lower frame **(18)** and upper frame **(17)** are parallel to the ground. This configuration provides a second degree of adjustment freedom: as the inclination angle increases, the air pressure required to exert the same force on the ground decreases. It includes a lower fixing device **(14)** positioned at the base of the deformable parallelogram, secured with a lower fixing bolt **(15)** that holds the pneumatic actuator with an internal guide **(11).** Additionally, an upper fixing device **(12)** equipped with an upper fixing bolt **(13)** connects the pneumatic actuator with an internal guide **(11)** to the upper fixing device **(12)** through the rod with threaded ends **(1).** This design provides independent mobility with respect to the upper **(17)** and lower **(18)** parallelogram frames of the deformable parallelogram **(21)** and allows for the adjustment of the angle of attack. The pneumatic actuator with an internal guide **(11),** operating as described, enhances performance compared to a conventional spring by adding damping to the system. This is due to the structural characteristics of the pneumatic bellows **(10)** and the physical properties of air, reducing the magnitude of vibrations and/or shocks caused by terrain irregularities, resulting in better working conditions for the entire seeding system, regardless of its type. This ensures uniformity in seeding depth and seed distribution, as the metering devices perform better, and the seed falls with fewer rebounds in the seed tube. It also prevents over-compaction of the soil near the seed and reduces fatigue on all the mechanical components of the seeder. Furthermore, the internal guide system **(****Figure 4****),** linked to the pneumatic bellows **(10),** allows it to operate at angles other than 0° relative to the vertical without causing deformations in the bellows **(10)** itself. It also ensures that the direction of the applied force is parallel to the internal guide (Figures **7** and **8**), making the pneumatic actuator with an internal guide **(11)** within the deformable parallelogram **(21)** more efficient. This maintains a constant load on the soil and allows the system to accurately follow the terrain, maximizing the effectiveness of seed placement at the same depth with optimal furrow conditions formed by the seeding body.

### • Air Pressure Regulation System (31)

The air pressure regulator **(25)** allows the system's working pressure to be manually increased or decreased, with its setting visible on a pressure gauge **(26).** The air pressure regulation system is connected via an air channel **(27)** to the regulated pressurized air compensating tank **(28),** passing through an Electronic Regulator **(33),** which provides fine and dynamic adjustment of the working pressure, being part of the pressure regulation system device **(39).** The pneumatic actuators with an internal guide (11) are directly connected to the regulated pressurized air compensating tank (28) independently through air channels (29) to provide the same pressure to all pneumatic actuators with an internal guide **(11),** ensuring identical operating conditions for each seeding body.

### • Function of the Compensating Tank (28)

The main purpose of the regulated pressurized air compensating tank **(28)** is to stabilize the air pressure in each of the pneumatic actuators with an internal guide **(11)** by providing direct and independent connections to each pneumatic actuator with an internal guide **(11)** and absorbing pressure variations caused by the dynamic movements of the devices during fieldwork. To achieve this, tests have determined that the volume of the regulated pressurized air compensating tank **(28)** must be at least twice the total volume of the pneumatic actuators with internal guide **(11)** connected through air channels **(29)** made of 12 mm diameter polyurethane tubes with suitable connectors. These channels allow sufficient airflow between each pneumatic actuator with an internal guide **(11)** and the regulated pressurized air compensating tank **(28),** thus absorbing pressure variations in each pneumatic actuator with internal guide **(11)** without significantly affecting the other actuators connected to the same tank. This ensures their independent operation, stabilizing the force exerted by the gauge wheel on the soil and reducing the amplitude of vibrations and shocks in each seeding unit or train independently. Additionally, it impacts the metering system mounted on each seeding body, improving its working conditions and ensuring accurate and uniform seeding depth at all times without causing over-compaction of the soil near the seed, which could negatively impact the seeding process.

### Tests performed

A series of tests, described below, were proposed to demonstrate the system's behavior and characterize it under different working conditions.

### Test 1: Force applied by the gauge-wheel

### Objective;

To obtain the variation in the force exerted by the gauge wheel at ground level with respect to the pneumatic pressure applied to the system and the angle of attack of the pneumatic actuator with an internal guide **(11).**

### Test description

A single seeding body was mounted on a structure that acted as a support, keeping the body suspended but stable. A scale was placed at the bottom to support the gauge wheel, which allowed us to measure the force exerted by the body under different system conditions.

Additionally, a pneumatic setup, matching the typical application characteristics mentioned in the current text, was assembled so that the conditions closely represented those the seeding body would encounter during nominal operation.

First, the dead weight exerted by the body with the entire system mounted but without pneumatic pressure was measured as a baseline reference.

Next, the pneumatic actuator with an internal guide **(11)** was positioned within the deformable parallelogram at a 15° angle. The pneumatic pressure applied was varied in 7 PSI increments (equivalent to approximately 0.5 kg/cm²) while recording the force applied on the gauge wheels on the scale, starting from 0 PSI up to 49 PSI.

Finally, the same test was repeated, but the position of the pneumatic actuator with an internal guide **(11)** was adjusted from 15° to 18° inclination relative to the vertical within the deformable parallelogram.

### Results obtained

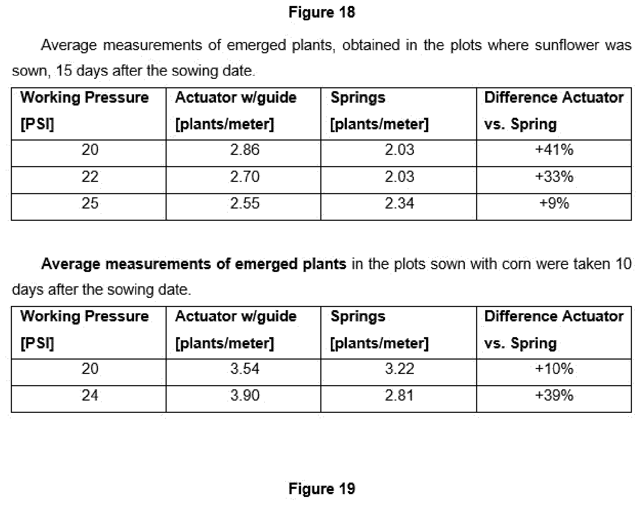

The following table shows the recorded values of pressure and scale weight for each test condition (see **Figure 18****).**

### Conclusions:

1. It can be observed that the greater the angle at which the pneumatic actuator with an internal guide (11) is positioned relative to the vertical, the greater the average variation in the force applied to the gauge wheel, based on the system's pressure. At an angle of 15°, the variation is 0.86 [kg/PSI], while at an angle of 18°, it is 1.05 [kg/PSI] in this particular seeding unit.
2. The system clearly does not exhibit linear behavior in terms of force variation on the gauge wheel with respect to pneumatic pressure. This emphasizes the need for an autonomous control system to monitor, record, and regulate the desired operating conditions to optimize sowing results.

### Test 2: Impact of the compensating tank on the system

### Objective

To demonstrate the compensating tank's utility and impact by comparing the system's pressure variations when the pneumatic actuator moves from a fully open/extended position to a fully closed/contracted position and vice versa.

### Description of the Test

With the system assembled in the same manner as in Test 1, a series of measurements were taken to assess the pressure variations in the pneumatic actuator with an internal guide (11), first without the compensating tank connected and then with the compensating tank connected. The pneumatic system was adjusted to two different working pressures for each initial state of the actuator-fully open/extended and fully closed/contracted-before being moved to its opposite extreme position.

### Test results

The following tables show the results obtained in the tests under the two previously mentioned conditions, with columns explained as follows:
· Initial Position of the actuator: Indicates whether the adjustment was made with the device in an open/extended state (Figure 7) or a closed/contracted state (Figure 8).
· Initial measurement: Indicates the pneumatic pressure at which the system was set in its initial position [PSI] and the force applied at ground level measured on the gauge wheels [kg].
· Final measurement: Indicates the pneumatic pressure measured when the pneumatic actuator with an internal guide (11) reached its final position (open/extended or closed/contracted) [PSI] and the force applied at ground level measured on the gauge wheels [kg].
· Variation: This shows the calculation of pneumatic pressure variations in the system [PSI] and the force applied at ground level measured on the gauge wheels [kg], recorded in both working conditions of the pneumatic actuator with an internal guide (11), considering the final measurement minus the initial measurement.

### Test 1: Measurement WITHOUT the Compensating Tank Connected. See Figure 18).

### Test 2: Measurement WITH the Compensating Tank Connected. See Figure 18).

### Conclusions

1. In both initial conditions, the variation recorded in the pressure and force applied at ground level on the gauge wheels was significantly lower in the system with the compensating tank connected than when it was not connected.
2. The pressure variation in the system without the compensating tank ranged from 10 to 12 PSI, while in the system with the compensating tank connected, it ranged from 2 to 4 PSI-at least three times lower.
3. The variation in force applied at ground level measured on the gauge wheels ranged from 7 kg to 12 kg, representing a 6% to 10% variation. In contrast, in the system with the compensating tank connected, the same force varied from 1 kg to 3 kg, representing a 1% to 2.6% variation, which is at least five times lower than the system without the compensating tank.
4. These results confirm the importance and positive impact of the compensating tank in achieving the intended goal of stabilizing the pressure exerted by the gauge wheel on the ground.

### TEST 3: Field verification, (see Figure 19)

### Objective

To verify the improvements in seeding conditions using the developed system through a real application, under nominal working conditions in the field, measuring seed emergence compared to a conventional spring-based system, exposing both systems to the same real working conditions.

### Description of the Test

The test was conducted using an Apache 27,000 seeder machine with 24 rows at 52 cm spacing, equipped with pneumatic metering devices and spring systems. Twelve of these were replaced with the developed pneumatic actuator with an internal guide (11), leaving half the machine equipped with each system to allow for comparisons under similar soil and weather conditions.

The tests were conducted for planting corn and sunflower crops on worked fields and no-till fields, respectively. Additionally, the working pressure of the pneumatic system was varied in different areas of the field to verify the impact of this variable on the expected results. Independent professional agronomists performed measurements to ensure a thorough and objective evaluation.

### Results

The first observation after seeding, both in the worked field and the no-till field, was that the rows seeded with the pneumatic actuator with an internal guide (11) presented a well-formed ridge (the covered furrow left after seeding), whereas the rows seeded with the spring system exhibited a slight furrow opening. This difference contributed to two main aspects:
1. Greater control of moisture loss in the seeding line.
2. In the event of sudden pre-emergence rain, there is less chance of water accumulating, reducing the risk of waterlogging in the seeding line.

**Average measurements of emerged plants** were obtained in the plots where sunflower was sown 15 days after the sowing date. **See** **Figure 19****).**

**Average measurements of emerged plants** were obtained in the plots where corn was sown 10 days after the sowing date. **See** **Figure 19****).**

In both cases, the rows sown with the pneumatic system had better seed distribution and uniform emergence.

### Conclusions

Based on the collected results, under nominal working conditions, simultaneously with the spring system intended to be replaced, the following conclusions can be drawn:
1. For both corn and sunflower seeds, the system shows better seed distribution, as well as quantity and uniformity of emergence in the rows where the seeder is equipped with a pneumatic actuator with an internal guide (11).
2. A different behavior was observed for each crop concerning the applied pneumatic pressure. In worked fields sown with corn, the best results were achieved with higher pneumatic working pressure, while in no-till fields sown with sunflower, the results were exactly the opposite.
3. The results confirm that the developed pneumatic actuator with an internal guide **(11)** represents a substantial improvement compared to the conventional spring system. Additionally, the ability to adjust the working pressure more precisely than with the spring system allows for optimizing seeding quality depending on the crop and soil type being worked. **See** **Figure 19****).**

## Claims

1. A seeding machine comprising a structural frame (30), wherein at least one deformable parallelogram (21) is connected to its lateral side through a coupling plate (40) belonging to a seeding body. It is **characterized by** comprising at least one air channel **(29)** connected at one end to a regulated pressurized air compensating tank **(28)** and at the other distal end to a pneumatic actuator with an internal guide **(11),** integrally arranged through a set of fastening means and positioned within at least one deformable parallelogram **(21).** This pneumatic actuator with an internal guide **(11)** is operatively connected to an air pressure regulation system **(31)** controlled by a control and monitoring system **(39).**

2. A seeding machine, according to claim 1, **characterized in that** the pneumatic actuator **(11)** comprises a rod with threaded ends **(1),** with a bushing and thread at one end and a piston with perforations **(2)** at the other distal end, which is linked to a cylinder cap **(3)** and a cylinder cap bushing **(4)** housed within a guide cylinder **(5).** The guide cylinder is integrally connected at one end through a set of components: a fixing plate **(6),** a lower cylinder reinforcement **(7),** a blind cap **(8),** and a fixing bushing **(9).**

3. A seeding machine, according to claim 1, **characterized in that** the air pressure regulation system **(31)** includes an air compressor **(23)** associated with a primary pressurized air tank **(24)** linked to an air pressure regulator **(25)** and a pressure gauge **(26).** The aforementioned primary pressurized air tank **(24)** is connected via an air channel **(27)** to a regulated pressurized air compensating tank **(28),** which, in turn, is connected via an air channel **(29)** to a pneumatic actuator with an internal guide **(11).**

4. A seeding machine, according to claim 1, **characterized in that** the control and monitoring system **(39)** includes an electronic regulator **(33)** associated with the air pressure regulator **(25),** connected to a 3-way electronically regulated solenoid valve **(34),** linked to a compensating tank pressure sensor **(32),** which, in turn, is connected to a bellows pressure sensor **(35),** associated with a processing unit with an integrated vibration sensor **(36),** all connected to a main control unit **(37)** through a CAN communication network **(38).**

5. A seeding machine, according to claim 1, **characterized in that** the pneumatic actuator with an internal guide **(11)** is associated with an upper cap **(16)** with a central hole and to a lower base **(22)** of the bellows via flanges.

6. A seeding machine, according to claim 1, **characterized in that** the pneumatic actuator with an internal guide **(11)** is mechanically connected at its upper end to an upper frame **(17)** of the deformable parallelogram **(21)** through a set of means that includes: an upper fixing device **(12)** and the upper fixing bolt **(13),** and at its lower end, it is connected to a lower frame **(18)** of the parallelogram **(21)** through the lower fixing device **(14)** and the lower fixing bolt**(15).**

7. A seeding machine, according to claim 1, **characterized in that** the position of the pneumatic actuator with an internal guide (11) within the deformable parallelogram (21) of each seeding body is at an angle β: ranging from 10° to 40° with respect to a representative vertical axis (Y-Y).

8. A seeding machine, according to claim 1, **characterized in that** the processing unit with a built-in vibration sensor **(36)** is connected to the movable front of the parallelogram **(20)** and, in turn, is linked to the bellows pressure sensor **(35),** the compensating tank pressure sensor **(32),** and the main control unit **(37)** through the CAN communication network **(38).**

9. A seeding machine, according to claim 1, **characterized in that** the main control unit **(37)** is connected to the regulated pressurized air compensating tank **(28),** which is supported by the structural frame of the seeder **(30)** through the fixing plate **(40).**
